# EUROPEAN PATENT SPECIFICATION

(11) **EP 1 528 958 B1**
(45) Date of publication and mention of the grant of the patent: **25.11.2009**
(21) Application number: 03739149.7
(22) Date of filing: 17.06.2003
(51) Int. Cl.: B05C 5/02

(54) **DIE HAVING MULTIPLE ORIFICE SLOT**
GIESSFORM MIT MEHREREN ÖFFNUNGEN IN EINEM SCHLITZ
MATRICE COMPRENANT UNE FENTE A ORIFICES MULTIPLES

(30) Priority: 13.08.2002 US 217715
(43) Date of publication of application: 11.05.2005
(73) Proprietor: 3M Innovative Properties Company, St. Paul MN 55133-3427 (US)
(72) Inventor: MAIER, Gary, W., Saint Paul, MN 55133-3427 (US); PEKUROVSKY, Mikhail, L., Saint Paul, MN 55133-3427 (US)
(74) Representative: Vossius & Partner
(86) International application number: PCT/US2003/018950
(87) International publication number: WO 2004/014570

(56) References cited:
- EP-A- 0 827 783
- WO-A-99/55790
- US-A- 5 756 163

## Description

### Background of Invention

The invention relates to coating and extruding dies. More specifically, the invention relates to the configuration of the coating or extruding orifices.

In US-A-5 756 163 a coating device is disclosed in which a nozzle is configured by combining a front block and at least one back block. A front block includes a portion which is projected toward a base member with respect to the back block, and a top face of the projected portion is processed into a curved face having a predetermined curvature radius. A top face of the back block, which is opposed to the base material, is processed into a flat face, and a plurality of discharging openings are provided therein for discharging a coating material therethrough. The base material first travels along the curved face of the front block The base member then travels over the flat face of the back block substantially in parallel with the flat face, while the coating material is discharged through the discharging openings, thus forming a stripe-shaped coating film on the surface of the base material.

Further, in EP-A-0 827 783 liquid application nozzles are disclosed which comprise a first block having therein a liquid reservoir extending in a longitudinale direction and an inner discharge portion composed of a multiplicity of small holes formed in a bottom of the liquid reservoir to extend along the longitudinal direction. Further, a second block is provided having an inner space, which forms a gas reservoir extending outside the first block in the longitudinal direction. An outer discharge portion is composed of a multiplicity of small holes and formed at the bottom of the inner space along the longitudinal direction and adapter to form a gas stream to surround from outside a linear-shaped liquid flow flowing down from the small holes, whereby a thin coating can be formed in a short time while suppressing consumption of a liquid and unevenness in coating is made hard to generate.

In WO 99/55790 an adhesive tape is disclosed which has a backing having a first side and a second side, and a plurality of adhesive stripes on the first side of the backing. The plurality of stripes and any adjacent uncoated stripes together create an adhesive portion of the tape that functions as a continuous band of adhesive such that the uncoated stripes are part of the adhesive portion and do not form a functional non-adhesive portion. The width of the adhesive stripes and the width of the uncoated stripes can be selected in combination with each other to control the tape properties. The tape has similar adhesive performance characteristics as a compositionally similar tape having the same backing and at least the same coating weight of the same adhesive coated across the entire surface of the backing

Coating and extruding dies with continuous slots are expensive to inanufacture and set. Machining and setup costs of continuous slot fluid bearing dies are large. Maintaining a uniform feed slot is beneficial in that fluid exiting the slot maintains a continuous cross-sectional profile. In order to maintain uniformity of the feed slot in the cross-web direction, dies have to be large and require elaborate mounting setup to provide adequate structural support around the slot. "Cross-web" direction is generally defined as the width dimension of a substrate (typically a web of paper or polymeric material) translating with respect to the die. The "cross-web" direction is perpendicular to the direction of travel of the web with respect to the die. "Cross-web" direction may be used to explain a direction of the die, the coating on a web, an extrudate or the web itself.

Dies with multiple orifices provided a less expensive alternative to continuous slot dies. Multiple orifice dies had a number of openings that allow the fluid (e.g. liquid) to exit the die distribution chamber. In order to provide a continuous cross-sectional profile of the fluid, fluid translating through the die was merged using external lands or troughs after it passed through the orifices. For example, in fluid bearing dies, downstream of where the fluid exited the die, a portion of the die was used to merge individual fluid streams into a continuous fluid coating on a web (often referred to as a "smoothing land"). Typically, a downstream portion of the smoothing land ended with a sharp edge, used to prevent ribbing and gaps in the coating. The length of the smoothing land is normally measured in the downstream direction, from the orifices to the sharp edge. Other types of dies combined the streams using a "trough" which collected and merged the fluid inside the die before the fluid was coated. Examples of multiple orifices are illustrated and described in US Patents 3,149,949; 4,774,109; 5,045,358; and 4,371,571

Because neighboring fluid streams from these previous multiple orifice type dies must be merged before coating (or extruding) on a web or other substrate,in order to form a continuous cross-sectional profile of the fluid, previous dies of this type have somewhat narrow range of coating (or extrusion) parameters (e.g., line speed, die settings, desired thickness of coated (or extruded) film, die position, etc.) in order to provide a coated (or extruded) layer which is continuous, smooth, and bubble free. This is due to the techniques required to merge the separate fluid streams created by the adjacent orifices. Especially troublesome is the merging point of the two streams. Air often becomes entrained between the fluid and the substrate at that point, which can cause imperfections in the end product.

### Brief Summary of the Invention

The invention is a die for dispensing flowable material according to independent claims 1 and 6. The die is comprised of a die block. An external face is disposed on the die block. At least one slot extends perpendicularly into the external face. The slot has a longitudinal dimension, a first longitudinal side and a second longitudinal side. At least one support member extends from the external surface into the slot. The support member extends continuously from the first longitudinal side to the second longitudinal side. At least a portion of the support member is disposed in a direction other than perpendicular to the longitudinal dimension. The support member is disposed to such that at least a portion of any plane extending from the first longitudinal side to the second longitudinal side, in a direction perpendicular to the longitudinal dimension of the slot, passes through a void area.

Further a method for dispensing flowable material through a die is provided with the features of claim 16.

### Brief Description of the Drawings

In this disclosure, several devices are illustrated. Throughout the drawings, like reference numerals are used to indicate common features or components of those devices.
FIG. 1 is a perspective schematic view of one embodiment of the inventive die.
FIG. 2 is a cross sectional view of one embodiment of the inventive die.
FIG. 3 is a partial front view of one embodiment of the inventive die.
FIG. 3A is a partial front view of one embodiment of the inventive die.
FIG. 4 is a partial front view of a second embodiment of the inventive die.
FIG. 4A is a partial front view of a second embodiment of the inventive die.
FIG. 5 is a partial front view of a third embodiment of the inventive die.
FIG. 5A is a partial front view of a third embodiment of the inventive die.
FIG 6 is a partial front view of a fourth embodiment of the inventive die.
FIG. 7 is a partial front view of a fifth embodiment of the inventive die.
FIG. 8 is a partial front view of a sixth embodiment of the inventive die.
FIG. 9A is a partial front view of a seventh embodiment of the inventive die.
FIG. 9B is a partial front view of an eighth embodiment of the inventive die.

While the above-identified drawing figures set forth several preferred embodiments of the invention, other embodiments are also contemplated, as noted in the discussion. In all cases, this disclosure presents the invention by way of representation and not limitation. It should be understood that numerous other modification and embodiments can be devised by those skilled in the art which fall within the scope of the invention.

### Detailed Description

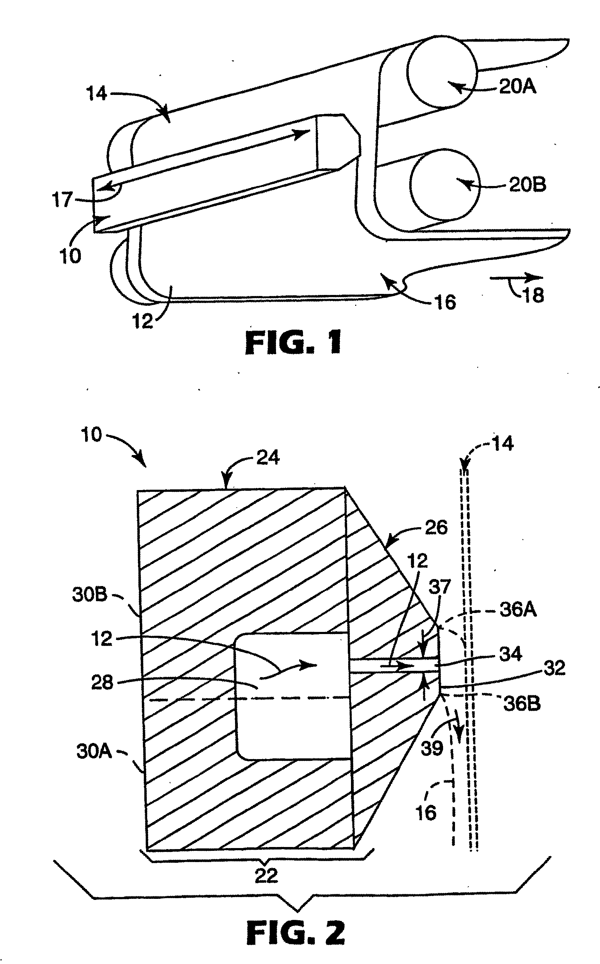

An exemplary die of the present invention is illustrated generally at 10 in FIG. 1. Die 10 is shown being used in a free span coating process where fluid 12 (i.e., a flowable material) is translated out onto web 14 so as to form coating 16. Longitudinal (or "cross web") direction of die 10 is indicated by arrow 17. Longitudinal direction 17 is perpendicular to the direction of travel of web 14 with respect to die 10. Web.14 can be formed of a multitude of various materials including polymers or paper. Web 14 is moving in the direction indicated by arrow 18 over directing rollers 20A and 20B. Roller 20A supports web 14 at a position upstream from die 10 and roller 20B supports web 14 at a position downstream from die 10, creating a "free span" of webbing material onto which die 10 applies fluid 12 as coating 16. While a free span fluid bearing coating process is illustrated, inventive die 10 may be utilized with many other types of coating and extruding processes, including fixed gap coating, curtain coating and slide coating, among others. Additionally, the shape of die 10 may vary according to the end user process and application.

A cross sectional view of one embodiment of inventive die 10 is illustrated in FIG. 2. Die 10 includes die block 22, which includes block portion 24 and faceplate portion 26. Manifold 28 is formed internally within block portion 24. While the illustrated die block 22 is formed of two pieces, any number of pieces may be used to form die block 22. For example, block portion 22 can be divided into first and second pieces 30A and 30B as indicated by dashed lines, (e.g.; by bolting or clamping). When faceplate portion 26 of die 10 is formed separately from block portion 22, the use of different faceplate portion 26 on the same block portion 24 is enabled. Alternatively, block portion 24 and faceplate portion 26 can be formed of one integral piece of metal to form die block 22. External face 32 is disposed on faceplate portion 26 of die block 22. Slot 34 extends into external face 32 of faceplate portion 26 in communication with manifold 28.

Fluid material 12 is introduced into manifold 28, typically by a pump (not shown) such an extruder or a positive displacement pump (e.g., a gear pump or metering pump (among others), as known in the art. Pressure in manifold 28 created by the pump forces fluid 12 out of slot 34. As fluid 12 emerges from slot 34 it wets external face 32 of faceplate portion 26 and forms first and second static lines 36A and 36B. A static line is known in the art and can be defined as the joining line of fluid 12, external face 32 and either the environment surrounding die 10 (typically air) or possibly another layer of fluid (e.g., in multiplayer coating dies). Static lines 36A form on die 10 on each side 37 of slot 34 as defined by width dimension 37. Width dimension 37 of slot 34 is defined between edge 41A of the most upstream orifices 40B and edge 41B of the most downstream orifices 40A. Fluid material 12 flows in a direction generally parallel to external face 32 on faceplate portion 26. The direction is indicated generally by reference number 39. Die 10 may be disposed against web 14 (shown in dotted lines) such that fluid 12 forms coating (or film) 16 on web 14. Alternatively, die 10 maybe used to extrude fluid 12 as a stand alone film such as in a casting type extrusion process, as known in the art. Additionally, multiple layers of fluid may be extruded or coated by die 10.

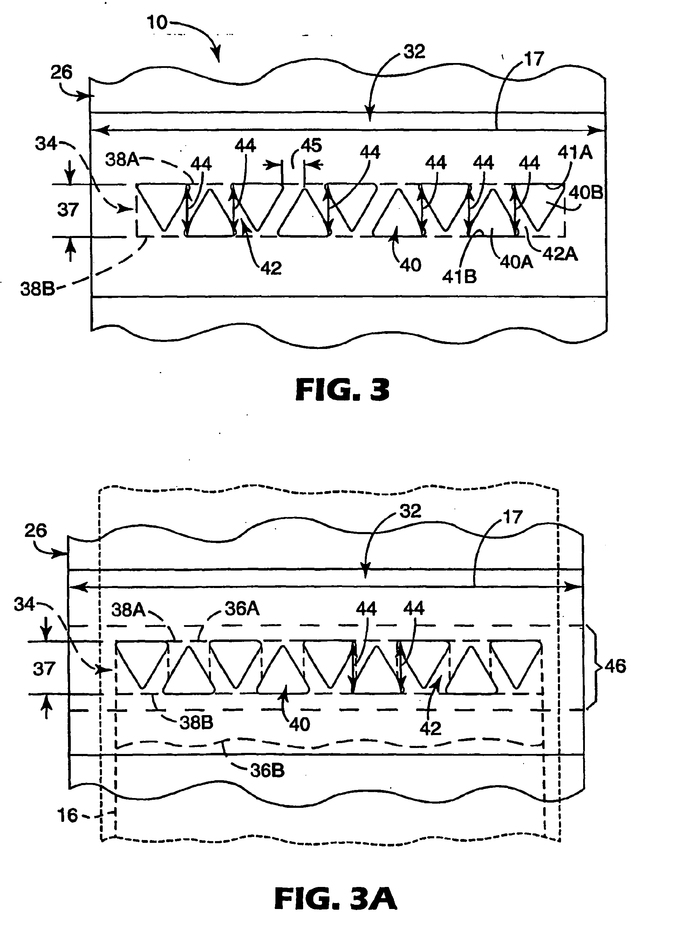

FIG. 3 illustrates the first embodiment of external face 32 of inventive die 10. Slot 34 is shown extending in longitudinal dimension 17. Slot 34 has first longitudinal side 38A and second longitudinal side 38B indicated by dotted lines. A plurality of orifices (or void areas) 40 extend into external face 32 of faceplate portion 26. A plurality of support members 42 are disposed such that an individual support member 42A is between every adjacent orifice 40A and 40B. It should be noted that when orifices and support members are referred to generally, a reference number alone will be used (i.e., "orifices 40" and "support members 42") however, when a specific orifice or support member are referred to, a letter will be appended (i.e., "orifice 40A" and "support member 42A").

Support members 42 extend continuously from first longitudinal side 38A to second longitudinal side 38B of slot 34 in such a manner that at least a portion of any plane (indicated by arrows 44) disposed between first longitudinal side 38A and second longitudinal side 38B in a direction perpendicular to longitudinal (or cross web) dimension 17 passes through at least one orifice (or void) 40.

In the illustrated embodiment, support members 42 extend from first and second longitudinal sides 38A and 38B at an angle of about sixty degrees with respect to first and longitudinal and second longitudinal sides 38A and 38B. In one embodiment, the thickness (in the longitudinal direction 17) of each support member is less than or equal to about 5 mils (about 130 microns) (indicated by reference number 45), and slot width 37 is less than or equal to about 40 mils (about 1020 microns), although the size and width may vary according to the end application. Disposing support members 42 in this fashion forms orifices 40 which are generally shaped as equilateral triangles. While nine orifices 40 are illustrated, the number may vary according to the end application (e.g., the length of slot 34). The distance support members 42 extend from external face 32 into slot 34 can vary according to the end application.

Forming support members 42 in slot 34 can be accomplished in various ways contemplated by this application. For example, orifices 40 can be machined (e.g., bored) into external face 32, or formed as part of a shim or insert (indicated as optional by dotted lines 46 in FIG. 3A). Shim 46 may be used to define slot 34 in die block 22 and include support structures 42 and orifices 40 as described. When shim 46 (the general use of which is known) is used to contain supports 42 and orifices 40 in slot 34, it allows the configuration of slot 34 to be changed by removing shim 46 from die 10 and replacing with an alternate shim (not shown) having a different configuration of support members 42 and orifices 40, such as those described with respect to FIG.'s 4, 5, 6, 7, and 8, below.

Support members 42 run continuously from first longitudinal side 38A to second longitudinal side 38B such that first and second longitudinal sides 38A and 38B are prevented from "bowing" in a convex or concave fashion, thereby deforming slot 34. "Bowing" occurs due to the pressure required to force fluid (e.g, liquid) 12 through die 10, and can vary according to the physical characteristics (e.g. viscosity) of the fluid 12. Some typical coating and extruding processes can generate from around 5 psi (around 34 kPa) of pressure to around 100 psi (around 690 kPa) of pressure on longitudinal sides 38A and 38B of slot 34. This level of pressure is resisted by support members 42.

The prevention of "bowing" provides for a high level of uniformity in the flow rate of fluid 12 exiting slot 34 (i.e., through orifices 40) across the die width. The overlapping of orifices 40 (exemplified by plane 44) in the direction of flow of fluid (e.g. liquid) 12 "overlaps" streams of fluid 12 as they exit orifices 40, thereby maintaining the cross-sectional continuity of the fluid film in the cross-web direction. In other words, gaps and bubbles are minimized such that a continuous layer (or film) of fluid is coated (or extruded) onto web 14 in the cross-web direction (i.e., in the longitudinal dimension 17 of die 10). This occurs since at each plane 44 along longitudinal dimension 17 of die 10, void or orifice 40 is emitting fluid 12. Thus, the benefits (e.g., preventing "bowing") of structure (i.e., support members 42) in slot 34 can be utilized while still emitting a continuous coating fluid layer 12. This "overlapping" is illustrated by dotted lines between orifices 40 showing fluid 12 on web 14. Overlapping minimizes the need to provide structure to join separate streams of fluid further downstream of slot 34, such as a smoothing land or a trough (i.e. a continuous groove extending into external surface 32). This allows the use of smaller dies which have the desired strength to withstand the pressure needed to force fluid 12 through die 10 while requiring minimal physical space.

First static line 36A is disposed proximate first longitudinal side 38A of slot 34. Second static line 36B is disposed proximate second longitudinal side 38B. It should be noted that the location of static lines 36A and 36B may vary as to the position on external face 32 according to the type of coating or extrusion being performed, and coating and extrusion settings among others. For example, first static line 36A may be disposed on a portion of support structures 42. It should also be noted that first static line 36A is disposed on external face 32 more proximate to first longitudinal side 38A than to second longitudinal side 38A than to second longitudinal side 38B. Additionally, second static line 36B is disposed on external face 32 more proximate to second longitudinal side 38B than to first longitudinal side 38A. Preferably the cross-sectional shape (i.e. taken in a plane generally parallel to external face 32) of each orifice 40 defined by support structure 42 extends substantially the entire slot width 37. In other words, the width of each orifice 40 (defined generally perpendicular to longitudinal direction 17) at external face 32 is substantially the same as slot width 37. This preferred configuration is exemplified particularly by the embodiments illustrated in FIG.'s 3-4A and 6-8. Providing orifices 40 with widths substantially the same as slot 34 increases performance characteristics of inventive die 10, allowing higher coating speed and control of thickness of coating 16.

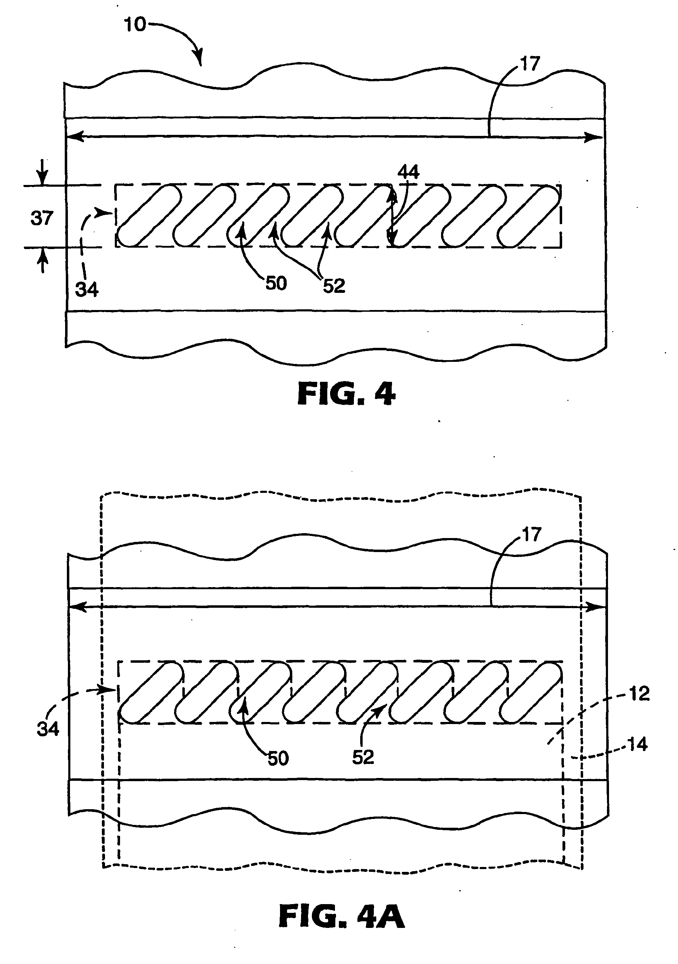

A second embodiment of inventive die 10 is illustrated in FIG. 4. In this embodiment, orifices 50 which are oval in cross-sectional shape are formed by diagonal support members 52. Support members 52 are configured such that planes 44 extending between first and second longitudinal sides 38A and 38B of slot 34 in a direction perpendicular to longitudinal dimension 17 or slot 34 pass through at least one orifice (or void) 50. Again, as illustrated by FIG. 4A, this provides an overlap of fluid 14 as it is expelled from orifices 50, creating a continuous cross-sectional profile in the cross-web direction. As discussed previously, the size and number of orifices 50 support members 52 (as with all embodiments described herein) can vary according to the end application.

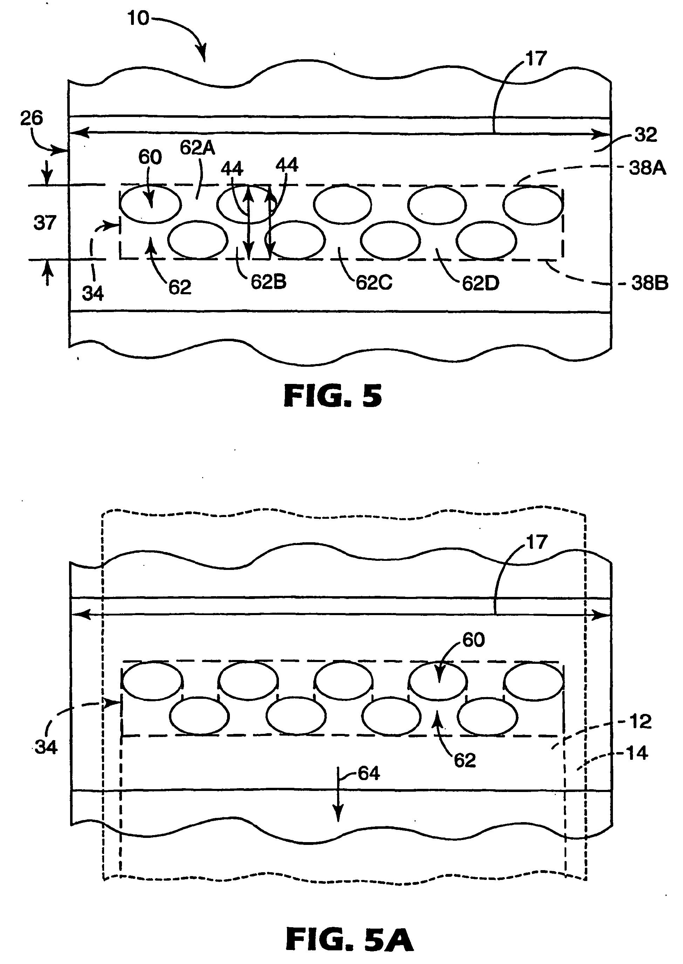

FIG. 5 illustrates a third embodiment of the inventive die 10. In this embodiment orifices 60 having an elliptical shape are disposed into external face 32 of lip portion 26. Support members 62 extend between orifices 60 providing structure which prevents slot 34 from "bowing". While not having a clearly linear shape, individual support members 62A, 62B, 62C and 62D are shaped to allow planes 44 disposed perpendicular to longitudinal sides 38A and 38B to pass through at least one orifice (or void) 60.

As illustrated in FIG. 5A, this allows fluid 12 translating through orifices 60 to "overlap" as it moves downstream (arrow 64) from orifices 60, minimizing (preferably eliminating) air gaps and discontinuity in longitudinal dimension 17 fluid 12 as a coating on web 14, or alternatively an extrudate.

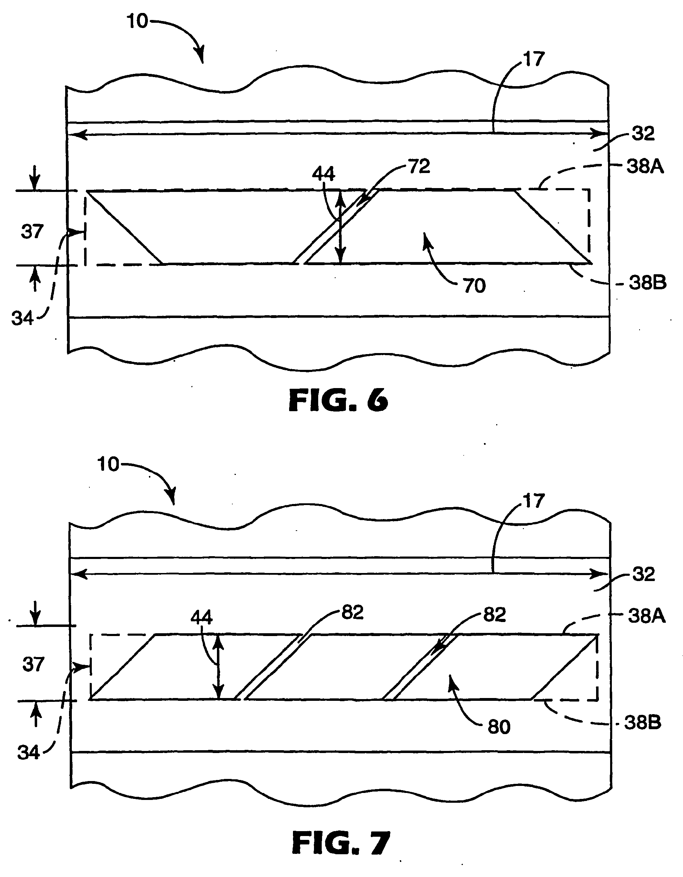

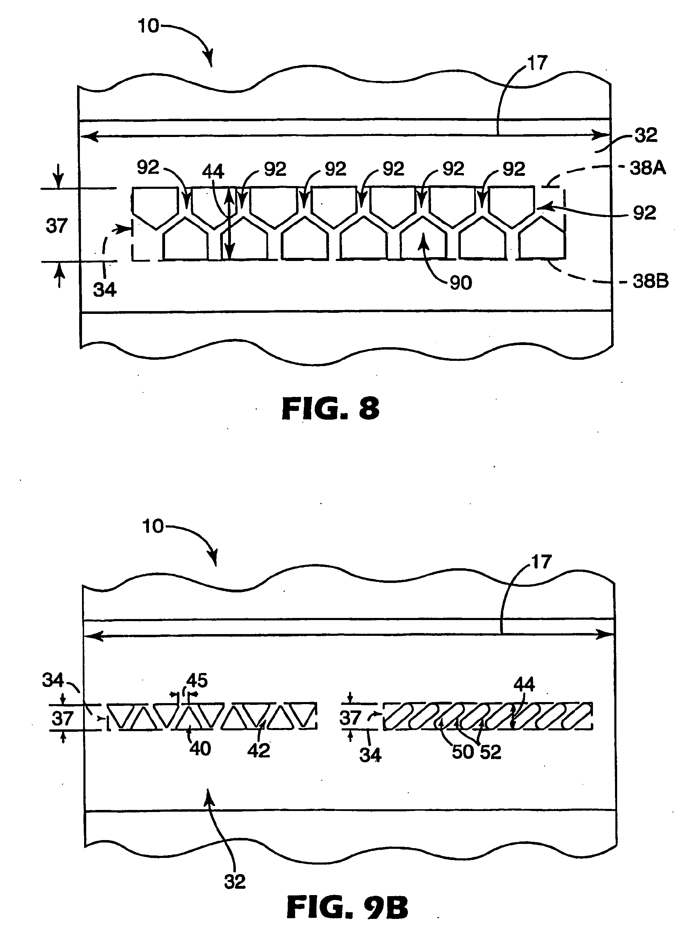

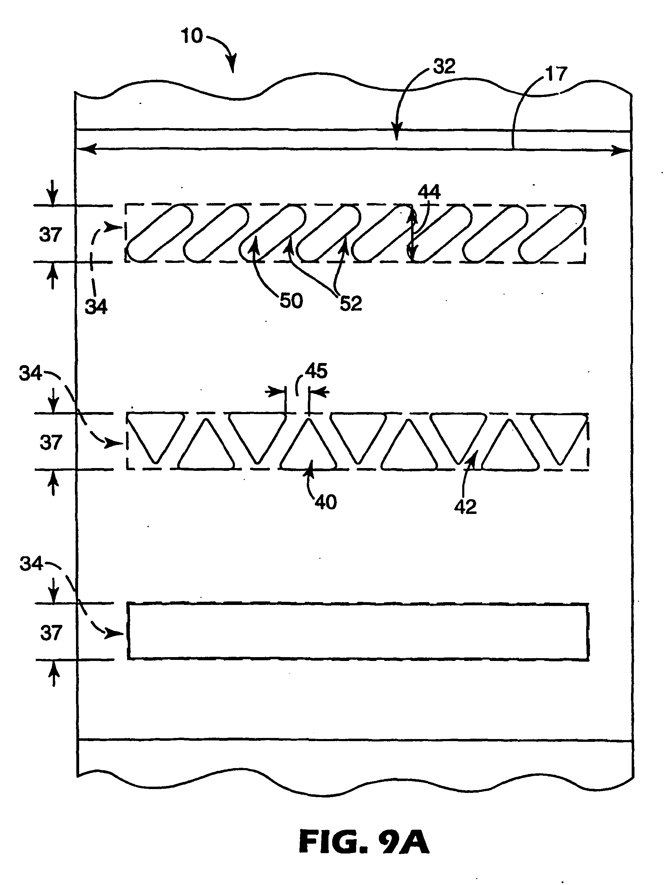

FIG.'s 6-8 illustrate additional embodiments of inventive die 10. Specifically, FIG. 6 illustrates support member 72 which forms trapezoidal orifices (or voids) 70 into external face 32. FIG. 7 illustrates support members 82 which form parallelogram shaped orifices (or voids) 80 into external face 32. FIG. 8 illustrates support members 92 which form pentagonal shaped orifices (or voids) 90 extruding into external face 32. In each of the embodiments illustrated by FIG.'s 6-8, planes 44 can be defined which extend between first and second longitudinal sides 38A and 38B of slot 34 in a direction perpendicular to longitudinal dimension 17 of slot 34. Every plane 44 along the longitudinal dimension 17 of slot 34 extends through at least one orifice (or void) (indicated in FIG.'s 6, 7 and 8 by reference numbers 70, 80 and 90, respectively). Any number of support structures 72, 82 and orifices 70 and 80 may be utilized in the inventive die without departing from the scope of the invention. This is rejected by small deviation from straightness in longitudinal direction 17 and additional stability of static line 36B across the external face 32. it should be noted that in one embodiment as illustrated in FIG. 9B, multiple slots 34 extending partially along the longitudinal dimension 17 of external face 32 may be used. These multiple slots 34 include orifices (shown by reference numbers) 40 and 50 separated by support structure 42 and 52. Additionally, any combination or number of rows (e.g.**,** multiple film layers) and as well as any number and any shape of orifices may be used in combination in the inventive die. For example, as illustrated in FIG. 9A three slots could be "stacked" so as to extend along the longitudinal dimension 17 of external face 32, creating three film layers. Each slot 34 could have different orifice shapes (as illustrated) including a continuous slot without support structures. Alternatively, the orifice shape can vary internally in each slot.

Although the present invention has been described with reference to preferred embodiments, workers skilled in the art will recognize that changes may be made in form and detail without departing from the scope of the invention.

## Claims

1. A die (10) for dispensing flowable material comprising:
a die block (221);
an external face (32) disposed on the die block;
at least one slot (34) extending perpendiculary into the external face (32) and having a longitudinal dimension (17), a first longitudinal side and a second longitudinal side;
**characterised by** at least one support member (42, 52) extending from the external surface (32) into the slot (34), the support member extending continuously from the first longitudinal side to the second longitudinal side; and
wherein at least a portion of the support member (42, 52) is disposed in a direction other than perpendicular to the longitudinal dimension, such that at least a portion of any plane extending from the first longitudinal side (38A) to the second longitudinal side (38B), in a direction perpendicular to the longitudinal dimension of the slot (34), passes through a void area.

2. The die of claim 1, wherein the external face (32) is disposed such that a static contact line (16A) is formed on the external face (32) more proximate the first longitudinal side (38A) than the second longitudinal side (38B) and a static contact line (16B) is formed on the external face (32) more proximate the second longitudinal side (38B) than the first as flowable material is dispensed from the die (10),

3. The die of claim 1 further comprising:
a plurality of support members (42, 52) extending from the first longitudinal side such that a plurality of voids are defined in the plane of the external face (32) between each two adjacent support members.

4. The die of claim 1 and further comprising:
multiple slots configured to allow the die (10) to extrude multiple fluid film layers.

5. The die of claim 1 and further comprising:
multiple slots extending into the external face (32) along a single longitudinal plane.

6. (Currently amended) A die (10) for dispensing flowable material comprising:
at least one die block (22) having an external face (32);
at least one array of orifices (50, 60) extending into the external face (32) so as to define a longitudinal dimension (17) parallel to the external face (32), and a width perpendicular to the longitudinal dimension and parallel to the external face (32), wherein each orifice defines a void area; and
**characteised in that** the orifices (50, 60) are disposed such that at least a portion of any plane extending through the array of orifices (50, 60) in a direction perpendicular to the longitudinal dimension passes through a void area.

7. (Currently amended) A die according to claims I or 6 wherein the die block (22) further comprises:
a manifold (28) disposed in the die block, wherein each void area is in communication with the manifold (28).

8. (Currently amended) A die according to claim 1 or 6 wherein the die block further comprises:
a removable faceplate portion (26), wherein the external face (32) is disposed on the faceplate portion (26).

9. (Currently amended) A die according to claim 1 or 6 wherein the die block (22) further comprises:
a plurality of block pieces removably secured to each other.

10. (Currently amended) A, die according to claim 1 or 6 wherein the die block (22) further comprises:
a shim (46) wherein the void areas are formed into the shim.

11. (Currently amended) A die according to claim 1 or 6 wherein the shape of each void area is substantially triangular.

12. (Currently amended) A die according to claim 1 or 6 wherein the shape of each void area is substantially polygonal.

13. (Currently amended) A die according to claim 1 or 6 wherein the shape of each void area can vary between void areas.

14. (Currently amended) A die according to claim 1 or 6 wherein the die (10) is used in a coating type process.

15. (Currently amended) A die according to claim 1 or 6 wherein the die (10) is used in a free span type coating process.

16. A method for dispensing flowable material through a die (10) comprising:
translating the flowable material through a slot (34) disposed in an external face (32) of the die (10), the slot (34) having a longitudinal dimension (17), a first longitudinal side and a second longitudinal side;
**characterised by** maintaining the shape of the slot (34) with at least one support structure (42, 52) extending from the external face (32) into the slot (34) and extending continuously between the first longitudinal edge and the second longitudinal edge; and
maintaining continuity of the flowable material along the longitudinal direction of the slot (34) by disposing the support structure (42, 52) at least partially in a direction other than perpendicular to the longitudinal dimension such that at least a portion of any plane disposed between the first longitudinal side and the second longitudinal side in a direction perpendicular to the longitudinal dimension of the slot passes through a void area.

17. The method of claim 16 and further comprising:
translating the fluid along the external face (32) after the step of translating the flowable material through the slot (34).

18. The method of claim 16 and further comprising:
forming a static contact line (36A) on one of the external face (32) and the support structure (42, 52) more proximate the first longitudinal side (38A) than the second longitudinal side (38B); and
forming a static contact line (36B) on the external face (32) more proximate the second longitudinal side (38B) than the first longitudinal side (38A).

## Patentansprüche

1. Düse (10) zum Abgeben eines fließfähigen Materials, aufweisend:
einen Düsenblock (221);
eine Außenfläche (32), die an dem Düsenblock angeordnet ist;
mindestens einen Schlitz (34), der sich senkrecht in die Außenfläche (32) erstreckt und eine Längendimension (17), eine erste Längsseite und eine zweite Längsseite aufweist;
**gekennzeichnet durch** mindestens ein Stützelement (42, 52), das sich von der Außenfläche (32) in den Schlitz (34) erstreckt, wobei sich das Stützelement kontinuierlich von der ersten Längsseite zu der zweiten Längsseite erstreckt; und
wobei mindestens ein Abschnitt des Stützelements (42, 52) in einer anderen Richtung als senkrecht zu der Längendimension angeordnet ist, so dass mindestens ein Abschnitt jeder Ebene, die sich von der ersten Längsseite (38A) zu der zweiten Längsseite (38B) in eine Richtung senkrecht zu der Längendimension des Schlitzes (34) erstreckt, **durch** eine Hohlraumfläche geht.

2. Düse nach Anspruch 1, wobei die Außenfläche (32) derart angeordnet ist, dass eine statische Kontaktlinie (16A) an der Außenfläche (32) näher zu der ersten Längsseite (38A) als zu der zweiten Längsseite (38B) gebildet ist, und dass eine statische Kontaktlinie (16B) an der Außenfläche (32) näher zu der zweiten Längsseite (38B) als der ersten gebildet ist, wenn fließfähiges Material von der Düse (10) abgegeben wird.

3. Düse nach Anspruch 1, des Weiteren aufweisend:
mehrere Stützelemente (42, 52), die sich von der ersten Längsseite derart erstrecken, dass mehrere Hohlräume in der Ebene der Außenfläche (32) zwischen jeweils zwei benachbarten Stützelementen definiert sind.

4. Düse nach Anspruch 1 und des Weiteren aufweisend:
mehrere Schlitze, die so konfiguriert sind, dass die Düse (10) mehrere fluide Filmschichten extrudieren kann.

5. Düse nach Anspruch 1 und des Weiteren aufweisend:
mehrere Schlitze, die sich in die Außenfläche (32) entlang einer einzigen Längsebene erstrecken.

6. Düse (10) zum Abgeben eines fließfähigen Materials, aufweisend:
mindestens einen Düsenblock (22) mit einer Außenfläche (32);
mindestens eine Gruppe von Öffnungen (50, 60), die sich in die Außenfläche (32) erstrecken, so dass eine Längendimension (17) parallel zu der Außenfläche (32) und eine Breite senkrecht zu der Längendimension und parallel zu der Außenfläche (32) definiert sind, wobei jede Öffnung eine Hohlraumfläche definiert; und
**dadurch gekennzeichnet, dass** die Öffnungen (50, 60) derart angeordnet sind, dass mindestens ein Teil jeder Ebene, die sich durch die Gruppe von Öffnungen (50, 60) in einer Richtung senkrecht zu der Längendimension erstreckt, durch eine Hohlraumfläche geht.

7. Düse nach Anspruch 1 oder 6, wobei der Düsenblock (22) des Weiteren aufweist:
einen Verteiler (28), der in dem Düsenblock angeordnet ist, wobei jede Hohlraumfläche mit dem Verteiler (28) in Verbindung steht.

8. Düse nach Anspruch 1 oder 6, wobei der Düsenblock des Weiteren aufweist:
einen entfernbaren Frontplattenabschnitt (26), wobei die Außenfläche (32) auf dem Frontplattenabschnitt (26) angeordnet ist.

9. Düse nach Anspruch 1 oder 6, wobei der Düsenblock (22) des Weiteren aufweist:
mehrere Blockstücke, die entfernbar aneinander befestigt sind.

10. Düse nach Anspruch 1 oder 6, wobei der Düsenblock (22) des Weiteren aufweist:
eine Scheibe (46), wobei die Hohlraumflächen in der Scheibe gebildet sind.

11. Düse nach Anspruch 1 oder 6, wobei die Form jeder Hohlraumfläche im Wesentlichen dreieckig ist.

12. Düse nach Anspruch 1 oder 6, wobei die Form jeder Hohlraumfläche im Wesentlichen polygonal ist.

13. Düse nach Anspruch 1 oder 6, wobei die Form jeder Hohlraumfläche zwischen Hohlraumflächen variieren kann.

14. Düse nach Anspruch 1 oder 6, wobei die Düse (10) in einem Prozess vom Beschichtungstyp verwendet wird.

15. Düse nach Anspruch 1 oder 6, wobei die Düse (10) in einem Prozess vom Free-Span-Beschichtungstyp verwendet wird.

16. Verfahren zum Abgeben eines fließfähigen Materials durch eine Düse (10), aufweisend:
Befördern des fließfähigen Materials durch einen Schlitz (34), der in einer Außenfläche (32) der Düse (10) angeordnet ist, wobei der Schlitz (34) eine Längendimension (17), eine erste Längsseite und eine zweite Längsseite aufweist;
**gekennzeichnet durch** Aufrechterhalten der Form des Schlitzes (34) mit mindestens einer Stützstruktur (42, 52), die sich von der Außenfläche (32) in den Schlitz (34) erstreckt, und sich kontinuierlich zwischen der ersten Längskante und der zweiten Längskante erstreckt; und
Aufrechterhalten der Kontinuität des fließfähigen Materials entlang der Längsrichtung des Schlitzes (34), indem die Stützstruktur (42, 52) mindestens teilweise in einer anderen Richtung als senkrecht zu der Längendimension angeordnet ist, so dass mindestens ein Abschnitt jeder Ebene, die zwischen der ersten Längsseite und der zweiten Längsseite in einer Richtung senkrecht zu der Längendimension des Schlitzes angeordnet ist, **durch** eine Hohlraumfläche geht.

17. Verfahren nach Anspruch 16 und des Weiteren aufweisend:
Befördern des Fluids entlang der Außenfläche (32) nach dem Schritt des Beförderns des fließfähigen Materials durch den Schlitz (34).

18. Verfahren nach Anspruch 16 und des Weiteren aufweisend:
Bilden einer statischen Kontaktlinie (36A) an einer von der Außenfläche (32) und der Stützstruktur (42, 52) näher zu der ersten Längsseite (38A) als zu der zweiten Längsseite (38B); und
Bilden einer statischen Kontaktlinie (36B) an der Außenfläche (32) näher zu der zweiten Längsseite (38B) als der ersten Längsseite (38A).

## Revendications

1. Filière (10) de distribution d'un matériau fluide, comprenant :
un bloc de filière (221),
une face extérieure (32) prévue sur ledit bloc de filière,
au moins une fente (34) qui s'étend perpendiculairement dans la face extérieure (32) et qui présente une dimension longitudinale (17), un premier côté longitudinal et un deuxième côté longitudinal,
**caractérisée par**
au moins un élément de support (42, 52) qui s'étend de la face extérieure (32) pour pénétrer dans la fente (34), l'élément de support s'étendant de manière continue entre le premier côté longitudinal et le deuxième côté longitudinal et
dans laquelle au moins une partie de l'élément de support (42, 52) est disposée dans une direction autre que la direction perpendiculaire à la dimension longitudinale de telle sorte qu'au moins une partie d'un plan quelconque qui s'étend entre le premier côté longitudinal (38A) et le deuxième côté longitudinal (38B), dans une direction perpendiculaire à la dimension longitudinale de la fente (34), passe par une zone vide.

2. Filière selon la revendication 1, dans laquelle la face extérieure (32) est disposée de manière à former sur la face extérieure (32) une ligne de contact statique (16A) plus proche du premier côté longitudinal (38A) que du deuxième côté longitudinal (38B) et à former sur la face extérieure (32) une ligne de contact statique (16B) plus proche du deuxième côté longitudinal (38B) que du premier lorsque le matériau fluide est distribué depuis la filière (10).

3. Filière selon la revendication 1, comprenant en outre :
plusieurs éléments de support (42, 52) qui s'étendent du premier côté longitudinal de manière à définir dans le plan de la face extérieure (32) plusieurs vides situés entre chaque paire d'éléments de support adjacents.

4. Filière selon la revendication 1, comprenant en outre :
plusieurs fentes configurées de manière à permettre à la filière (10) d'extruder plusieurs couches de film fluide.

5. Filière selon la revendication 1, comprenant en outre :
plusieurs fentes qui s'étendent dans la face extérieure (32) dans un même plan longitudinal.

6. Filière (10) de distribution d'un matériau fluide, comprenant :
au moins un bloc de filière (22) qui présente une face extérieure (32),
au moins une rangée d'orifices (50, 60) qui s'étendent dans la face extérieure (32) de façon à présenter une dimension longitudinale (17) parallèle à la face extérieure (32) et une largeur perpendiculaire à la dimension longitudinale et parallèle à la face extérieure (32), chaque orifice définissant une zone vide, et
**caractérisée en ce que**
les orifices (50, 60) sont disposés de telle sorte qu'au moins une partie d'un plan quelconque qui s'étend à travers la rangée d'orifices (50, 60) dans une direction perpendiculaire à la dimension longitudinale passe par une zone vide.

7. Filière selon la revendication 1 ou 6, dans laquelle le bloc de filière (22) comprend en outre :
un collecteur (28) disposé dans le bloc de filière, chaque zone vide communiquant avec le collecteur (28).

8. Filière selon la revendication 1 ou 6, dans laquelle le bloc de filière comprend en outre :
une partie amovible (26) de plaque de face, la face extérieure (32) étant disposée sur la partie (26) de plaque de face.

9. Filière selon la revendication 1 ou 6, dans laquelle le bloc de filière (22) comprend en outre :
plusieurs éléments de bloc fixés les uns aux autres de manière libérable.

10. Filière selon la revendication 1 ou 6, dans laquelle le bloc de filière (22) comprend en outre :
une cale d'épaisseur (46), les zones vides étant formées dans la cale d'épaisseur.

11. Filière selon la revendication 1 ou 6, dans laquelle la forme de chaque zone vide est essentiellement triangulaire.

12. Filière selon la revendication 1 ou 6, dans laquelle la forme de chaque zone vide est essentiellement polygonale.

13. Filière selon la revendication 1 ou 6, dans laquelle la forme de chaque zone vide peut varier d'une zone vide à l'autre.

14. Filière selon la revendication 1 ou 6, dans laquelle la filière (10) est utilisée dans une opération de type revêtement.

15. Filière selon la revendication 1 ou 6, dans laquelle la filière (10) est utilisée dans une opération de revêtement du type à extension libre.

16. Procédé de distribution d'un matériau fluide à travers une filière (10), comprenant les étapes qui consistent à :
déplacer le matériau fluide à travers une fente (34) disposée dans une face extérieure (32) de la filière (10), la fente (34) ayant une dimension longitudinale (17), un premier côté longitudinal et un deuxième côté longitudinal,
**caractérisé par** les étapes qui consistent à :
maintenir la forme de la fente (34) à l'aide d'au moins une structure de support (42, 52) qui s'étend de la face extérieure (32) pour pénétrer dans la fente (34) et qui s'étend de manière continue entre le premier bord longitudinal et le deuxième bord longitudinal et
maintenir la continuité du matériau fluide dans la direction longitudinale de la fente (34) en disposant au moins une partie de la structure de support (42, 52) dans une direction autre que la direction perpendiculaire à la dimension longitudinale de manière à ce qu'au moins une partie d'un plan quelconque situé entre le premier côté longitudinal et le deuxième côté longitudinal dans une direction perpendiculaire à la dimension longitudinale de la fente passe par une zone vide.

17. Procédé selon la revendication 16, comprenant en outre l'étape qui consiste à :
déplacer le fluide le long de la face extérieure (32) après l'étape de déplacement du matériau fluide à travers la fente (34).

18. Procédé selon la revendication 16, comprenant en outre les étapes qui consistent à :
former sur la face extérieure (32) ou sur la structure de support (42, 52) une ligne de contact statique (36A) plus proche du premier côté longitudinal (38A) que du deuxième côté longitudinal (38B) et
former sur la face extérieure (32) une ligne de contact statique (36B) plus proche du deuxième côté longitudinal (38B) que du premier côté longitudinal (38A).
